# EUROPEAN PATENT APPLICATION

(11) **EP 4 611 156 A1**
(43) Date of publication of application: **03.09.2025**
(21) Application number: 23929093.5
(22) Date of filing: 24.03.2023
(51) Int. Cl.: H01M 50/449, H01M 10/054

(54) **COMPOSITE SEPARATOR, SECONDARY BATTERY, AND ELECTRICAL APPARATUS**

(71) Applicant: Contemporary Amperex Technology (Hong Kong) Limited, Hong Kong (HK)
(72) Inventor: GUAN, Yingjie, Ningde, Fujian 352100 (CN)
(74) Representative: Jacob, Reuben Ellis
(86) International application number: PCT/CN2023/083895
(87) International publication number: WO 2024/197491

(57) **Abstract**

The present application provides a composite separator, a secondary battery, and an electrical apparatus. The composite separator comprises a separator substrate and a polymer coating located on one side of the separator substrate, the sodium ionic conductivity of the composite separator being 0.3 mS/cm-1 mS/cm. The polymer coating helps to reduce the contact between metal deposited on current collectors and electrolytes, thereby reducing side reactions between the metal and the electrolytes, and improving the cycle performance and the storage performance of batteries.

## Description

### TECHNICAL FIELD

The present application relates to the technical field of secondary batteries, and in particular to a composite separator, a secondary battery and an electrical apparatus.

### BACKGROUND

In recent years, secondary batteries are widely used in energy storage power source systems such as water power, thermal power, wind power and solar power stations, as well as power tools, electric bicycles, electric motorcycles, electric vehicles, military equipment, aerospace and other fields.

Interface stability is an important indicator for measuring secondary batteries. The side reactions between the electrode plate and the electrolyte solution will seriously affect the stability of the interface, resulting in a decrease in the electrochemical performance and safety performance of the battery, which cannot meet the application needs of the new generation of electrochemical systems.

### SUMMARY OF THE INVENTION

The present application is made in view of the above-mentioned problems, and its purpose is to provide a composite separator comprising a polymer coating, the polymer coating being beneficial to reduce the contact between the metal deposited on the current collector and the electrolyte solution, thereby reducing side reactions between the metal and the electrolyte solution and improving the cycling performance and storage performance of the battery.

In a first aspect of the present application, a composite separator is provided, including a separator substrate and a polymer coating located on one side of the separator substrate, wherein the sodium ion conductivity of the composite separator is 0.3 mS/cm to 1 mS/cm.

By providing a polymer coating with high sodium ion conductivity on one side of the separator substrate, the sodium metal phase in the negative electrode plate can be effectively protected, the side reaction between the electrolyte solution and the metal can be reduced, and the cycling performance and storage performance of the battery can be improved. On the one hand, the polymer coating with high sodium ion conductivity can effectively change the transport mode of sodium ions between the electrolyte solution and the electrode plate, and reduce the free electrolyte solution solvent on the surface of the electrode plate through solid phase transport, thereby reducing the side reaction between the electrolyte solution and the electrode plate. On the other hand, the polymer coating covers the surface of the electrode plate through elastic compression during the battery assembly process, and under the action of mechanical force, it further reduces the contact between the sodium metal phase in the negative electrode plate and the electrolyte solution, thereby protecting the sodium metal phase and improving cycling performance and storage performance of the battery.

In any embodiment, the polymer coating includes at least one of polymers containing sodium carboxylate groups and/or sodium sulfonate groups, the polymer being conductive to metallic sodium ions.

Polymers containing sodium carboxylate groups and/or sodium sulfonate groups can conduct sodium ions, and polymer coatings containing sodium carboxylate groups and/or sodium sulfonate groups can remove solvents from solvated sodium ions during sodium ion conduction, reduce the free electrolyte solution solvent on the interface between sodium metal and the separator, thereby reducing side reactions between the electrolyte solution and metallic sodium and improving the cycling performance and storage performance of the battery.

In any embodiment, the polymer includes one or more of sodium carboxymethyl cellulose, sodium polyacrylate, sodium alginate, Na-type perfluorosulfonic acid resin, sodium polymethacrylate and sodium polystyrene sulfonate, and optionally includes one or more of sodium carboxymethyl cellulose and sodium alginate.

The polymer coating containing the above polymers has high sodium ion conductivity, and by changing the solvation structure of sodium ions in the electrolyte solution, the free electrolyte solution solvent on the interface between the sodium metal and the separator is reduced, thereby reducing the side reaction between the electrolyte solution and metallic sodium and improving the cycling performance and storage performance of the battery. Polymers containing sodium carboxymethyl cellulose or sodium alginate are beneficial to further improving the cycling performance and storage performance of the battery.

In any embodiment, the thickness of the polymer coating is 15 nm to 1500 nm, optionally 50 nm to 1000 nm.

Controlling the thickness of the polymer coating to be 15 nm to 1500 nm can avoid or reduce the insufficient protection by the polymer coating for the sodium metal phase in the negative electrode plate due to too thin thickness, and can also avoid or reduce an increase in the internal resistance of the battery due to too thick thickness which would have an adverse effect on the battery. Further controlling the thickness of the polymer coating to be 50 nm to 1000 nm will help further improve cycling performance and storage performance of the battery.

In any embodiment, the polymer coating further includes a surfactant additive, wherein the surfactant additive includes one or more of sodium dodecyl sulfate, bis(sodium sulfopropyl)disulfide and polyethylene glycol, and optionally includes bis(sodium sulfopropyl)disulfide.

The addition of surface additives is beneficial to improving the wettability between the polymer coating and sodium metal, so that sodium ions can be more evenly deposited on the surface of the negative electrode current collector, reducing the generation of sodium dendrites and avoiding internal short circuits in the battery. It is also beneficial to improving the cycling performance and storage performance of sodium metal batteries.

In any embodiment, based on the total mass of the polymer coating, the mass content of the surfactant additive is 0.05%-5%, optionally 0.2%-3%.

Controlling the mass content of the surfactant additive to be 0.05%-5% can avoid or reduce the fact that the mass content of the surfactant additive is too low which would result in a failure in improvement of the wettability between the polymer coating and the sodium metal, and can also avoid or reduce the fact that the mass content of the surfactant additive is too high which would result in an increase in battery impedance and thus cause a decrease in battery performance. Further controlling the mass content of the surfactant additive to be 0.2%-3% will help further improve the cycling performance and storage performance of the battery.

In any embodiment, the polymer coating further includes a reinforcing component, which includes one or more of polyvinylidene fluoride, styrene-butadiene copolymer, polyimide, polyacrylonitrile, polyacrylamide, polymethyl methacrylate, nitrile butadiene rubber and polyurethane, and optionally includes styrene-butadiene copolymer.

Adding the reinforcing component to the polymer coating is beneficial to improving the mechanical strength and flexibility of the composite separator, and expanding the application of the composite separator.

In any embodiment, based on the total mass of the polymer coating, the mass content of the reinforcing component is 0.01%-50%, optionally 0.05%-10%.

By controlling the mass content of the reinforcing component to be 0.01%-50% can avoid or reduce the fact that the mass content of the reinforcing component is too low which would result in a failure in improvement of the performance of the composite separator, and can also avoid or reduce the fact that the mass content of the reinforcing component is too high which would result in an increase in battery impedance and thus cause a decrease in battery performance. Further controlling the mass content of the reinforcing component to be 0.05%-10% will help further improve the cycling performance and storage performance of the battery.

In any embodiment, the separator substrate includes one or more of polyethylene, polypropylene, polyester, cellulose, polyimide, polyamide, spandex fiber and aramid fiber, and optionally includes polyethylene.

The sources of the separator substrate are wide, and the above separator substrates can all be used in combination with the polymer coating to improve battery performance.

A second aspect of the present application provides a secondary battery comprising a negative electrode plate, an electrolyte solution, and the composite separator described in the first aspect, wherein the polymer coating is located on the side of the negative electrode plate.

The composite separator located on the side of the polymer negative electrode plate can effectively protect the sodium metal phase in the negative electrode plate, reduce the side reaction between the electrolyte solution and metallic sodium, and improve the electrochemical performance of the battery.

In any embodiment, the secondary battery is a negative-electrode-free sodium secondary battery.

In any embodiment, the electrolyte solution includes one or more of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether and crown ether, optionally includes one or more of ethylene glycol dimethyl ether, ethylene glycol diethyl ether, diethylene glycol dimethyl ether, and tetraethylene glycol dimethyl ether.

Ether solvents have better molecular anti-reduction properties, which can promote the formation of a stable solid electrolyte interface on the sodium metal surface and reduce side reactions during battery cycling. The combination of the composite separator and the ether solvent can simultaneously realize the protection for the sodium metal phase in the negative electrode plate by the polymer coating and the formation of a stable solid electrolyte interface, which greatly reduces the occurrence of side reactions and improves the performance of the battery. The ether solvent including one or more of ethylene glycol dimethyl ether, ethylene glycol diethyl ether, diethylene glycol dimethyl ether, and tetraethylene glycol dimethyl ether is beneficial to further improving the cycling performance and storage performance of the battery.

In any embodiment, the negative electrode plate includes a negative electrode current collector and a primer layer disposed on at least one surface of the negative electrode current collector, and the primer layer includes one or more of carbon nanotubes, graphite, graphene, silver-carbon composite nanoparticles, and tin-carbon composite nanoparticles.

The above-mentioned primer layer not only has excellent conductivity, but also facilitates the uniform deposition of metal ions on the surface of the current collector, thereby improving the coulombic efficiency and cycling performance of the battery.

In any embodiment, the primer layer has a surface density of 0.5 g/m²~35 g/m².

The primer layer with a surface density of 0.5 g/m²-35 g/m² is beneficial to the uniform distribution of nucleation sites in the negative-electrode-free secondary battery, promoting the uniform deposition of metals without affecting the electron transport behavior.

In any embodiment, the thickness of the primer layer is 0.2 µm to 50 µm.

Controlling the thickness of the primer layer to be 0.2 µm to 50 µm can provide sufficient nucleation sites for negative-electrode-free secondary batteries, which is beneficial to the uniform deposition of metal ions and inhibition of dendrites.

A third aspect of the present application provides an electrical apparatus comprising the secondary battery of the second aspect of the present application.

### BRIEF DESCRIPTION OF DRAWINGS

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic view of an electrical apparatus in which a secondary battery is used as a power source according to an embodiment of the present application.

### Description of reference numerals:

1 battery pack; 2 upper box; 3 lower box; 4 battery module; 5 secondary battery; 51 case; 52 electrode assembly; 53 cover plate.

### DETAILED DESCRIPTION

Hereinafter, the embodiments of the composite separator, secondary battery, and electrical apparatus of the present application are specifically disclosed by referring to the detailed description of the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Metal secondary batteries are secondary batteries that use metal materials (such as lithium, sodium, magnesium, potassium and other metals) as negative electrodes. The metal material on the negative electrode current collector can be pre-deposited on the surface of the current collector as a negative electrode active material, or can be in-situ deposited on the surface of the current collector during the charging and discharging process. That is, metal secondary batteries include sodium batteries, lithium batteries, magnesium batteries, potassium batteries, etc. with negative electrode active materials, as well as negative-electrode-free batteries. The negative electrode plate in the negative-electrode-free battery uses a negative electrode current collector and does not contain negative electrode active materials. During the first charging and discharging process, metal ions are in-situ deposited on the negative electrode current collector.

There are many problems with metal batteries at present. Taking the negative-electrode-free sodium battery as an example, during the charging and discharging process, side reactions are likely to occur between metallic sodium and the electrolyte solution, which consumes a large amount of sodium elements and reduces cycling performance and storage performance of the battery.

### [Composite separator]

Based on this, the present application proposes a composite separator, including a separator substrate and a polymer coating located on one side of the separator substrate, wherein the sodium ion conductivity of the composite separator is 0.3 mS/cm to 1 mS/cm.

The polymer coating reduces the contact between sodium metal and the electrolyte solution, thus reducing the side reaction between sodium metal and the electrolyte solution, and realizing the protection for sodium metal. The polymer coating is located between the negative electrode plate and the separator substrate, and the polymer coating can conduct metal ions. During the charging process, sodium metal ions diffuse from the positive electrode plate side to the negative electrode plate side, and are deposited on the negative electrode current collector or the primer layer of the negative electrode through polymer coating conduction. During the discharging process, sodium metal loses electrons and desorbs from the negative electrode plate in the form of sodium metal ions and diffuses to the positive electrode plate side through polymer coating conduction.

Herein, the term "one side of the separator substrate" refers to one side of the surface of the separator substrate.

By providing a polymer coating with high sodium ion conductivity on one side of the separator substrate, the sodium metal phase in the negative electrode plate can be effectively protected, the side reaction between the electrolyte solution and the metal can be reduced, and the cycling performance and storage performance of the battery can be improved. On the one hand, the polymer coating with high sodium ion conductivity can effectively change the transport mode of sodium ions between the electrolyte solution and the electrode plate, and reduce the free electrolyte solution solvent on the surface of the electrode plate through solid phase transport, thereby reducing the side reaction between the electrolyte solution and the electrode plate. On the other hand, the polymer coating covers the surface of the electrode plate through elastic compression during the battery assembly process, and under the action of mechanical force, it further reduces the contact between the sodium metal phase in the negative electrode plate and the electrolyte solution, thereby protecting the sodium metal phase and improving cycling performance and storage performance of the battery.

In some embodiments, the polymer coating is in direct contact with the surface of the separator substrate.

In some embodiments, the polymer coating and the separator substrate have one or more coating layers.

In some embodiments, the polymer coating includes at least one of polymers containing sodium carboxylate groups and/or sodium sulfonate groups, the polymer being conductive to metallic sodium ions.

In some embodiments, the polymer coating includes a polymer containing sodium carboxylate groups.

In some embodiments, the polymer coating includes a polymer containing sodium sulfonate groups.

In some embodiments, the polymer coating includes polymers containing sodium carboxylate groups and sodium sulfonate groups.

Polymers containing sodium carboxylate groups and/or sodium sulfonate groups can conduct sodium ions, and the polymer coating containing sodium carboxylate groups and/or sodium sulfonate groups can change the solvation structure of sodium ions in the electrolyte solution, reduce the free electrolyte solution solvent on the interface between sodium metal and the separator, thereby reducing the side reaction between the electrolyte solution and metallic sodium and improving cycling performance and storage performance of the battery.

In some embodiments, the polymer includes one or more of sodium carboxymethyl cellulose, sodium polyacrylate, sodium alginate, Na-type perfluorosulfonic acid resin, sodium polymethacrylate and sodium polystyrene sulfonate, and optionally includes one or more of sodium carboxymethyl cellulose and sodium alginate.

In some embodiments, the polymer includes sodium carboxymethylcellulose. In some embodiments, the polymer includes sodium alginate. In some embodiments, the polymer includes sodium carboxymethyl cellulose and sodium alginate. In some embodiments, the polymer includes sodium polyacrylate. In some embodiments, the polymer includes Na-type perfluorosulfonic acid resin.

The polymer coating containing the above polymers has high sodium ion conductivity, and by changing the solvation structure of sodium ions in the electrolyte solution, the free electrolyte solution solvent on the interface between the sodium metal and the separator is reduced, thereby reducing the side reaction between the electrolyte solution and metallic sodium and improving the cycling performance and storage performance of the battery. Polymers containing sodium carboxymethyl cellulose or sodium alginate are beneficial to further improving the cycling performance and storage performance of the battery.

In some embodiments, the thickness of the polymer coating is 15 nm to 1500 nm, optionally 50 nm to 1000 nm. In some embodiments, the thickness of the polymer coating is optionally 15 nm, 50 nm, 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, 1000 nm, 1150 nm, 1200 nm, 1250 nm, 1300 nm, 1350 nm, 1400 nm, 1450 nm, 1500 nm, or a value in a range consisting of any two of the above points.

Controlling the thickness of the polymer coating to be 15 nm to 1500 nm can avoid or reduce the insufficient protection by the polymer coating for the sodium metal phase in the negative electrode plate due to too thin thickness, and can also avoid or reduce an increase in the internal resistance of the battery due to too thick thickness which would have an adverse effect on the battery. Further controlling the thickness of the polymer coating to be 50 nm to 1000 nm will help further improve cycling performance and storage performance of the battery.

In some embodiments, the polymer coating further includes a surfactant additive, wherein the surfactant additive includes one or more of sodium dodecyl sulfate, bis(sodium sulfopropyl)disulfide and polyethylene glycol, and optionally includes bis(sodium sulfopropyl)disulfide.

The addition of the surfactant additive is beneficial to improving the wettability between the polymer coating and sodium metal, so that sodium ions can be more evenly deposited on the surface of the negative electrode current collector, reducing the generation of sodium dendrites and avoiding internal short circuits in the battery. It is also beneficial to improving the cycling performance and storage performance of sodium metal batteries.

In some embodiments, based on the total mass of the polymer coating, the mass content of the surfactant additive is 0.05%-5%, optionally 0.2%-3%. In some embodiments,based on the total mass of the polymer coating, the mass content of the surfactant additive is optionally 0.05%, 0.1%, 0.15%, 0.2%, 0.4%, 0.5%, 0.6%, 0.8%, 1.0%, 1.5%, 2.0%, 2.5%, 3.0%, 3.5%, 4.0%, 4.5%, 5%, or a value in a range consisting of any two of the above points.

Controlling the mass content of the surfactant additive to be 0.05%-5% can avoid or reduce the fact that the mass content of the surfactant additive is too low which would result in a failure in improvement of the wettability between the polymer coating and the sodium metal, and can also avoid or reduce the fact that the mass content of the surfactant additive is too high which would result in an increase in battery impedance and thus cause a decrease in battery performance. Further controlling the mass content of the surfactant additive to be 0.2%-3% will help further improve the cycling performance and storage performance of the battery.

In some embodiments, the polymer coating further includes a reinforcing component, which includes one or more of polyvinylidene fluoride, styrene-butadiene copolymer, polyimide, polyacrylonitrile, polyacrylamide, polymethyl methacrylate, nitrile butadiene rubber and polyurethane, and optionally includes styrene-butadiene copolymer.

Adding the reinforcing component to the polymer coating is beneficial to improving the mechanical strength and flexibility of the composite separator, and expanding the application of the composite separator.

In some embodiments, based on the total mass of the polymer coating, the mass content of the reinforcing component is 0.01%-50%, optionally 0.05%-10%. In some embodiments, based on the total mass of the polymer coating, the mass content of the reinforcing component is optionally 0.01%, 0.05%, 0.1%, 0.5%, 1%, 2%, 4%, 5%, 6%, 8%, 10%, 15%, 20%, 25%, 30%, 35%, 40%, 45%, 50%, or a value in a range consisting of any two of the above points.

By controlling the mass content of the reinforcing component to be 0.01%-50% can avoid or reduce the fact that the mass content of the reinforcing component is too low which would result in a failure in improvement of the performance of the composite separator, and can also avoid or reduce the fact that the mass content of the reinforcing component is too high which would result in an increase in battery impedance and thus cause a decrease in battery performance. Further controlling the mass content of the reinforcing component to be 0.05%-10% will help further improve the cycling performance and storage performance of the battery.

In some embodiments, the separator substrate includes one or more of polyethylene, polypropylene, polyester, cellulose, polyimide, polyamide, spandex fiber and aramid fiber, and optionally includes polyethylene.

In some embodiments, the separator substrate includes polyethylene. In some embodiments, the separator substrate includes polypropylene. In some embodiments, the separator substrate includes polyamide. In some embodiments, the separator substrate includes aramid fiber.

The sources of the separator substrate are wide, and the above separator substrates can all be used in combination with the polymer coating to improve battery performance.

### [Positive electrode plate]

The positive electrode plate includes a positive electrode current collector and a positive electrode active material layer formed on at least a portion of the surface of the positive electrode current collector. The positive electrode active material layer includes a positive electrode active material, and the positive electrode active material may include at least one of a layered transition metal oxide, a polyanionic compound and a Prussian blue-based compound.

The transition metal in the layered transition metal oxide may be at least one of Mn, Fe, Ni, Co, Cr, Cu, Ti, Zn, V, Zr and Ce. Optionally, the layered transition metal oxide is, for example, NaxMO₂, wherein M is one or more of Ti, V, Mn, Co, Ni, Fe, Cr and Cu, and 0 < x≤1.

The polyanionic compound may be a class of compounds having metal ions, transition metal ions and tetrahedral (YO₄)ₙ₋anionic units. The metal ion is optionally sodium ion, lithium ion, potassium ion, and zinc ion; the transition metal is optionally at least one of Mn, Fe, Ni, Co, Cr, Cu, Ti, Zn, V, Zr, and Ce; Y is optionally at least one of P, S, and Si; and n represents the valence state of (YO₄)ⁿ⁻.

The Prussian blue-based compound may be a class of compounds having sodium ion, transition metal ion and cyanide ion (CN-). The transition metal may be at least one of Mn, Fe, Ni, Co, Cr, Cu, Ti, Zn, V, Zr and Ce. The Prussian blue-based compound is, for example, NaₐMe_{b}Me'_{c}(CN)₆, wherein Me and Me' are each independently at least one of Ni, Cu, Fe, Mn, Co and Zn, 0<a≤2, 0<b<1, and 0<c<1.

The positive electrode active material layer may further include a conductive agent to improve the conductivity of the positive electrode. The conductive agent is optionally one or more of Super P, acetylene black, carbon black, Ketjen black, carbon dots, carbon nanotubes, graphite, graphene and carbon nanofibers.

The positive electrode active material layer may further include a binder to firmly bind the positive electrode active material and an optional conductive agent to the positive electrode current collector. The binder is optionally at least one of polyvinylidene fluoride (PVDF), polytetrafluoroethylene (PTFE), polyacrylic acid (PAA), polyvinyl alcohol (PVA), ethylene-vinyl acetate copolymer (EVA), styrene-butadiene rubber (SBR), carboxymethyl cellulose (CMC), sodium alginate (SA), polymethacrylic acid (PMA) and carboxymethyl chitosan (CMCS).

The positive electrode current collector can be a conductive carbon sheet, a metal foil, a carbon-coated metal foil, a porous metal plate or a composite current collector. The conductive carbon material of the conductive carbon sheet is optionally one or more of Super P, carbon black, Ketjen black, carbon dots, carbon nanotubes, graphite, graphene and carbon nanofibers. The metal materials of the metal foil, carbon-coated metal foil and porous metal plate are each independently selected from at least one of copper, aluminum, nickel and stainless steel. The composite current collector can be a composite current collector formed by the combination of a metal foil and a polymer base film.

In some embodiments, the positive electrode plate may be prepared by: dispersing the above components, such as the positive electrode active material, the conductive agent, the binder, and any other component, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

### [Negative electrode plate]

The negative electrode plate may include a negative electrode current collector only, not including a negative electrode active material. For the negative electrode plate, a metal phase can also be pre-deposited on the negative electrode current collector.

In some embodiments, the negative electrode current collector may be a metal foil or a composite current collector. For example, an aluminum foil or a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode plate includes a negative electrode current collector and a primer layer disposed on at least one surface of the negative electrode current collector, and the primer layer includes one or more of carbon nanotubes, graphite, graphene, carbon black, alumina, silver-carbon composite nanoparticles, and tin-carbon composite nanoparticles.

In this article, the term "carbon nanotube" refers to a seamless hollow cylinder formed by rolling up a single layer or multiple layers of graphene, with a tube diameter of less than 100 nm and a tube length of more than 100 nm. By way of example, the carbon nanotubes include, but are not limited to, single-walled carbon nanotubes and/or multi-walled carbon nanotubes.

The above-mentioned primer layer not only has excellent conductivity, but also facilitates the uniform deposition of metal ions on the surface of the current collector, thereby improving the cycling performance and safety of the battery.

In some embodiments, the primer layer has a surface density of 0.5 g/m²~35 g/m².

In some embodiments, the surface density of the primer layer is optionally 0.5 g/m², 1 g/m², 2 g/m², 3 g/m², 4 g/m², 5 g/m², 10 g/m²,15 g/m², 20 g/m², 25 g/m², 30 g/m², 35 g/m², or a value in a range consisting of any two of the above points.

The primer layer with a surface density of 5 g/m²-50 g/m² is beneficial to the uniform distribution of nucleation sites, promoting the uniform deposition of metals without affecting the electron transport behavior.

In some embodiments, the thickness of the primer layer is 0.2 µm to 50 µm.

In some embodiments, the thickness of the primer layer is optionally 0.5 µm, 1 µm, 1.5 µm, 2 µm, 5 µm, 10 µm, 15 µm, 20 µm, 25 µm, 30 µm, 35 µm, 40 µm, 45 µm, 50 µm, or a value in a range consisting of any two of the above points.

Controlling the thickness of the primer layer to be 2 µm to 100 µm can provide sufficient nucleation sites, which is beneficial to the uniform deposition of metal ions and inhibition of dendrites.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid state, a gelation state, or an all-solid state.

In some embodiments, the electrolyte is an electrolyte solution. The electrolyte solution comprises an electrolyte salt and a solvent.

In some embodiments, the electrolyte salt can be selected from at least one of sodium hexafluorophosphate, sodium difluorosulfonimide, sodium bistrifluoromethanesulfonimide, sodium trifluoromethanesulfonate, sodium tetrafluoroborate, sodium difluorophosphate, sodium perchlorate and sodium chloride.

In some embodiments, the electrolyte solution includes an ester solvent, and the ester solvent includes at least one selected from ethylene carbonate, propylene carbonate, diethyl carbonate, dimethyl carbonate, methyl ethyl carbonate, propylene carbonate, methyl acetate, ethyl propionate and fluorinated ethylene carbonate.

In some embodiments, the electrolyte solution includes an ether solvent, and the ether solvent includes one or more of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether and crown ether, optionally includes one or more of ethylene glycol dimethyl ether, ethylene glycol diethyl ether, diethylene glycol dimethyl ether, and tetraethylene glycol dimethyl ether.

Ether solvents have better molecular anti-reduction properties, which can promote the formation of a stable solid electrolyte interface on the sodium metal surface and reduce side reactions during battery cycling. The combination of the composite separator and the ether solvent can simultaneously realize the protection for the sodium metal phase in the negative electrode plate by the polymer coating and the formation of a stable solid electrolyte interface, which greatly reduces the occurrence of side reactions and improves the performance of the battery. The ether solvent including one or more of ethylene glycol dimethyl ether, ethylene glycol diethyl ether, diethylene glycol dimethyl ether, and tetraethylene glycol dimethyl ether is beneficial to further improving the cycling performance and storage performance of the battery.

In some embodiments, the electrolyte solution optionally further includes an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Secondary battery]

A secondary battery includes a negative electrode plate, an electrolyte solution, and a composite separator in some embodiments.

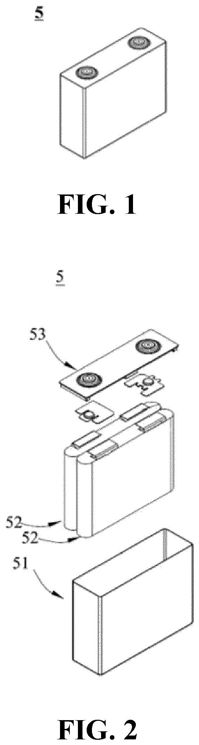

The shape of the secondary battery is not particularly limited in the present application, and may be a cylinder, a square, or any other shape. For example, Fig. 1 shows a battery cell 5 with a square structure as an example, and Fig. 2 is an exploded view of the battery cell 5.

In some embodiments, the secondary battery further includes a positive electrode plate.

In some embodiments, the secondary battery includes at least one of lithium battery and sodium battery.

In some embodiments, the secondary battery includes at least one of potassium battery, magnesium battery and zinc battery.

In some embodiments, the secondary battery is a negative-electrode-free sodium battery.

In the negative electrode-free sodium secondary battery, the negative electrode active material is not pre-deposited, and only a negative electrode current collector is included. During the first charge, sodium ions gain electrons on the cathode side, and metallic sodium is deposited on the surface of the current collector to form a sodium metal phase. During discharge, the metallic sodium can be converted into sodium ions and return to the positive electrode, thus achieving cyclic charge and discharge. Compared with other sodium secondary batteries, negative-electrode-free sodium secondary batteries can achieve higher energy density because they are not limited by negative electrode materials. Moreover, while maintaining the high electrochemical performance of the battery, it can shorten the battery production cycle, reduce the battery manufacturing cost, and greatly improve production efficiency.

In some embodiments, the CB value of the negative-electrode-free sodium secondary battery is less than or equal to 0.1.

The CB value is the unit area capacity of the negative electrode plate in the secondary battery divided by the unit area capacity of the positive electrode plate. Since the negative-electrode-free battery does not contain negative electrode active materials, the unit area capacity of the negative electrode plate is small, and the CB value of the secondary battery is less than or equal to 0.1.

In some embodiments, referring to Fig. 2, the outer package may comprise a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

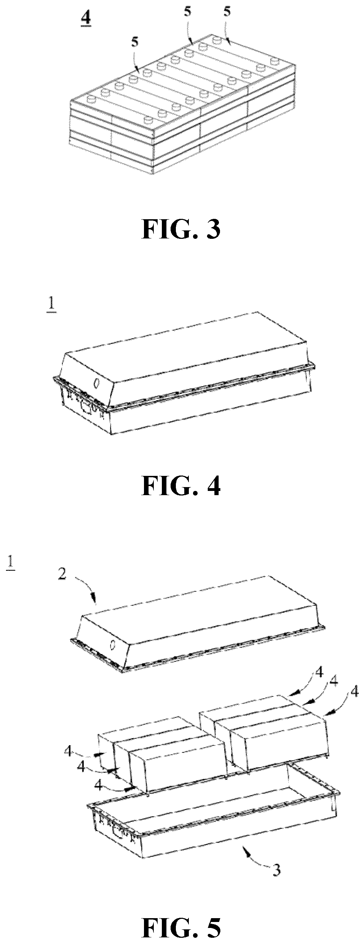

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the application and capacity of the battery pack.

Figs. 4 and 5 show a battery pack 1 as an example. Referring to Figs. 4 and 5, the battery pack 1 may comprise a battery box and a plurality of battery modules 4 provided in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

### [Electrical apparatus]

In an embodiment of the present application, an electrical apparatus is provided, which includes at least one of the secondary battery according to any embodiment, the battery module according to any embodiment, or the battery pack according to any embodiment.

The electrical apparatus includes at least one of the secondary battery, the battery module, and the battery pack provided in the present application. The secondary battery, the battery module, or the battery pack can be used as a power source for the electrical apparatus, and can also be used as an energy storage unit for the electrical apparatus. The electrical apparatus may include a mobile device (e.g., a mobile phone, a laptop, etc.), an electric vehicle (e.g., all-electric vehicle, a hybrid electric vehicle, a plug-in hybrid electric vehicle, an electric bicycle, an electric scooter, an electric golf cart, an electric truck, etc.), an electric train, a ship and a satellite, and an energy storage system, etc., but is not limited thereto.

For the electrical apparatus, the secondary battery, the battery module, or the battery pack can be selected according to its use requirements.

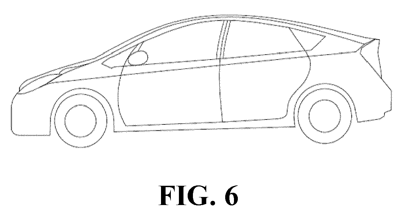

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

### EXAMPLES

Embodiments of the present application will be described below. The embodiments described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### I. Preparation method

### Embodiment 1

### 1) Preparation of composite separator

Sodium carboxymethyl cellulose (CMC) was dissolved in deionized water to obtain a polymer slurry. The polymer slurry was evenly coated on one surface of a polyethylene (PE) separator substrate using a scraper to prepare a polymer coating. After coating, the coating was transferred to a vacuum drying oven for drying, oven-drying, and cutting to obtain a composite separator. The thickness of the polymer coating is 200 nm, and the sodium ion conductivity of the composite separator is 0.53 mS/cm.

### 2) Preparation of positive electrode plate

A 10wt% polyvinylidene fluoride binder was fully dissolved in N-methylpyrrolidone, then 10wt% carbon black conductive agent and 80wt% Na₄Fe₃(PO₄)₂P₂O₇positive electrode active material were added and uniformly stirred to obtain a positive electrode slurry. The slurry was evenly coated on the surface of the current collector aluminum foil to prepare the positive electrode film layer which was then transferred to a vacuum drying oven for complete drying. The dried electrode plate was rolled and punched to obtain a positive electrode plate.

### 3) Preparation of negative electrode plate

Aluminum foil was used as the negative electrode current collector for slitting and die-cutting to prepare the negative electrode plate without a negative electrode film layer.

### 4) Electrolyte solution

In a glove box under an argon atmosphere (H₂O <0.1ppm, and O₂<0.1ppm), a sodium salt sodium hexafluorophosphate NaPF₆was dissolved in an organic solvent ethylene glycol dimethyl ether (DME), and then stirred well to obtain an electrolyte solution with sodium salt concentration of 1 mol/L.

### 5) Preparation of battery

The positive electrode plate, the composite separator and the negative electrode plate were stacked in sequence, so that the composite separator was positioned between the positive electrode plate and the negative electrode plate to provide isolation, with the polymer coating in the composite separator being located on the side of the negative electrode plate, then tabs were welded to the bare battery cell, the bare battery cell was put into an aluminum-plastic film, which was baked at 80°C to remove water, loaded with the electrolyte solution and sealed, to obtain an uncharged battery. The uncharged battery then went through procedures such as standing, hot and cold pressing, formation, shaping and capacity testing successively to obtain the negative-electrode-free sodium secondary battery product of Example 1.

### Embodiment 2

### 1) Preparation of composite separator

Sodium carboxymethyl cellulose (CMC) and bis(sodium sulfopropyl)disulfide were dissolved in deionized water to obtain a polymer slurry. The polymer slurry was evenly coated on one surface of a polyethylene (PE) separator substrate using a scraper to prepare a polymer coating. After coating, the coating was transferred to a vacuum drying oven for drying, oven-drying, and cutting to obtain a composite separator. The thickness of the polymer coating is 200 nm. Based on the total mass of the polymer coating, the mass content of bis(sodium sulfopropyl)disulfide is 0.5%. The sodium ion conductivity of the composite separator is 0.53 mS/cm.

### 2) Preparation of positive electrode plate

A 10wt% polyvinylidene fluoride binder was fully dissolved in N-methylpyrrolidone, then 10wt% carbon black conductive agent and 80wt%Na₄Fe₃(PO₄)₂P₂O₇positive electrode active material were added and uniformly stirred to obtain a positive electrode slurry. The slurry was evenly coated on the surface of the current collector aluminum foil to prepare the positive electrode film layer which was then transferred to a vacuum drying oven for complete drying. The dried electrode plate was rolled and punched to obtain a positive electrode plate.

### 3) Preparation of negative electrode plate

Aluminum foil was used as the negative electrode current collector for slitting and die-cutting to prepare the negative electrode plate without a negative electrode film layer.

### 4) Electrolyte solution

In a glove box under an argon atmosphere (H₂O <0.1ppm, and O₂<0.1ppm), a sodium salt sodium hexafluorophosphate NaPF₆was dissolved in an organic solvent ethylene glycol dimethyl ether (DME), and then stirred well to obtain an electrolyte solution with sodium salt concentration of 1 mol/L.

### 5) Preparation of battery

The positive electrode plate, the composite separator and the negative electrode plate were stacked in sequence, so that the composite separator was positioned between the positive electrode plate and the negative electrode plate to provide isolation, with the polymer coating in the composite separator being located on the side of the negative electrode plate, then tabs were welded to the bare battery cell, the bare battery cell was put into an aluminum-plastic film, which was baked at 80°C to remove water, loaded with the electrolyte solution and sealed, to obtain an uncharged battery. The uncharged battery then went through procedures such as standing, hot and cold pressing, formation, shaping and capacity testing successively to obtain the negative-electrode-free sodium secondary battery product of Example 2.

### Example 3-24

The preparation methods of the batteries of Examples 3-24 are similar to that of the battery of Example 2, but the preparation parameters of the composite separator and the secondary battery are adjusted. The specific parameters are shown in Tables 1 and 2.

### Example 25

### 1) Preparation of composite separator

Sodium carboxymethyl cellulose (CMC) and bis(sodium sulfopropyl)disulfide were dissolved in deionized water to obtain a polymer slurry. The polymer slurry was evenly coated on one surface of a polyethylene (PE) separator substrate using a scraper to prepare a polymer coating. After coating, the coating was transferred to a vacuum drying oven for drying, oven-drying, and cutting to obtain a composite separator. The thickness of the polymer coating is 200 nm. Based on the total mass of the polymer coating,the mass content of bis(sodium sulfopropyl)disulfide is 0.5%. The sodium ion conductivity of the composite separator is 0.53 mS/cm.

### 2) Preparation of positive electrode plate

A 10wt% polyvinylidene fluoride binder was fully dissolved in N-methylpyrrolidone, then 10wt% carbon black conductive agent and 80wt%Na₄Fe₃(PO₄)₂P₂O₇positive electrode active material were added and uniformly stirred to obtain a positive electrode slurry. The slurry was evenly coated on the surface of the current collector aluminum foil to prepare the positive electrode film layer which was then transferred to a vacuum drying oven for complete drying. The dried electrode plate was rolled and punched to obtain a positive electrode plate.

### 3) Preparation of negative electrode plate

5 g of single-walled carbon nanotubes was weighed and dissolved in deionized water. A slurry was prepared by ultrasonic dispersion. The slurry was applied on an aluminum foil negative electrode collector to prepare a primer layer which was then transferred to a vacuum drying oven for complete drying, and then slit and die-cut to prepare a negative electrode plate without a negative electrode structure. The surface density of the primer layer is 1 g/m².

### 4) Electrolyte solution

In a glove box under an argon atmosphere (H₂O <0.1ppm, and O₂<0.1ppm), a sodium salt sodium hexafluorophosphate NaPF₆was dissolved in an organic solvent ethylene glycol dimethyl ether (DME), and then stirred well to obtain an electrolyte solution with sodium salt concentration of 1 mol/L.

### 5) Preparation of battery

The positive electrode plate, the composite separator and the negative electrode plate were stacked in sequence, so that the composite separator was positioned between the positive electrode plate and the negative electrode plate to provide isolation, with the polymer coating in the composite separator being located on the side of the negative electrode plate, then tabs were welded to the bare battery cell, the bare battery cell was put into an aluminum-plastic film, which was baked at 80°C to remove water, loaded with the electrolyte solution and sealed, to obtain an uncharged battery. The uncharged battery then went through procedures such as standing, hot and cold pressing, formation, shaping and capacity testing successively to obtain the sodium secondary battery product of Example 25.

### Example 26

The preparation method of the battery of Example 26 is similar to that of the battery of Example 25, but the primer layer on the negative electrode current collector is adjusted. The specific parameters are shown in Tables 1 and 2.

### Comparative Example 1

The battery preparation method in Comparative Example 1 is basically similar to that in Example 1, but the composite separator only includes a separator substrate and does not include a polymer coating. The specific parameters are shown in Tables 1 and 2.

### Comparative Example 2

The preparation method of the battery of Comparative Example 2 is similar to that of the battery of Comparative Example 1, but the type of solvent in the electrolyte solution is adjusted. The specific parameters are shown in Tables 1 and 2.

### Comparative Example 3

### 1) Preparation of composite separator

Polyvinylidene fluoride (PVDF) was dissolved in deionized water to obtain a polymer slurry. The polymer slurry was evenly coated on one surface of a polyethylene (PE) separator substrate using a scraper to prepare a polymer coating. After coating, the coating was transferred to a vacuum drying oven for drying, oven-drying, and cutting to obtain a composite separator. The thickness of the polymer coating is 200 nm, and the sodium ion conductivity of the composite separator is 0.11 mS/cm.

### 2) Preparation of positive electrode plate

A 10wt% polyvinylidene fluoride binder was fully dissolved in N-methylpyrrolidone, then 10wt% carbon black conductive agent and 80wt%Na₄Fe₃(PO₄)₂P₂O₇positive electrode active material were added and uniformly stirred to obtain a positive electrode slurry. The slurry was evenly coated on the surface of the current collector aluminum foil to prepare the positive electrode film layer which was then transferred to a vacuum drying oven for complete drying. The dried electrode plate was rolled and punched to obtain a positive electrode plate.

### 3) Preparation of negative electrode plate

The aluminum foil current collector was slit and die-cut to obtain a negative electrode plate without a negative electrode film layer.

### 4) Electrolyte solution

In a glove box under an argon atmosphere (H₂O <0.1ppm, and O₂<0.1ppm), a sodium salt sodium hexafluorophosphate NaPF₆was dissolved in an organic solvent ethylene glycol dimethyl ether (DME), and then stirred well to obtain an electrolyte solution with sodium salt concentration of 1.0 mol/L.

### 5) Preparation of battery

The positive electrode plate, the composite separator and the negative electrode plate were stacked in sequence, so that the composite separator was positioned between the positive electrode plate and the negative electrode plate to provide isolation, with the polymer coating in the composite separator being located on the side of the negative electrode plate, then tabs were welded to the bare battery cell, the bare battery cell was put into an aluminum-plastic film, which was baked at 80°C to remove water, loaded with the electrolyte solution and sealed, to obtain an uncharged battery. The uncharged battery then went through procedures such as standing, hot and cold pressing, formation, shaping and capacity testing successively to obtain the negative-electrode-free sodium secondary battery product of Comparative Example 3.

### Comparative Example 4

The preparation method of the battery of Comparative Example 4 is similar to that of the battery of Comparative Example 3, but the type of solvent in the electrolyte solution is adjusted. The specific parameters are shown in Tables 1 and 2.

### II. Performance test

### 1. Composite separator

### 1) Sodium ion conductivity test

Taking Example 1 as an example, a symmetric battery was used to test the sodium ion conductivity of the composite separator. The preparation process of the symmetrical battery is similar to that of the battery of Example 1, except that its negative electrode plate is coated with a hard carbon material. At the same time, the stacking mode of the battery is negative electrode plate, separator, and negative electrode plate. The calculation formula of sodium ion conductivity is: σ=l/(K·S)*10, where σ is the sodium ion conductivity of the composite separator, in units of mS/cm; l is the thickness of one layer of composite separator, in units of m; S is the effective area of the composite separator in the test battery, in units of m²; K is the bulk resistance of the electrolyte solution in one layer of composite separator, in units of Ω. The impedance of the battery was tested using a French Bio-Logic VMP3B electrochemical workstation to obtain the bulk resistance of the composite separator. The test procedures for the comparative examples and other examples were the same as above.

### 2. Battery performance test

### 1). Cycling performance test

The cycling performance test process is as follows: the battery is charged to 3.7 V at a constant current of 1 C at 25°C, then charged at a constant voltage of 3.7 V until the current drops to 0.05 C, and then discharged to 2.5 V at a constant current of 1 C to obtain an initial capacity (C0); the charge and discharge process is repeated to the nth cycle to obtain a discharge capacity of the sodium ion battery after n cycles, which is recorded as Cdn. The process capacity of the battery after the 100th cycle (C100) is recorded. The capacity retention rate after 100 cycles = C100/C1×100%. The test procedures for the comparative examples and other examples were the same as above.

### 2). Storage performance test

The storage performance test process is as follows: after the prepared full battery is left standing for 4 hours at 25°C, the battery is charged to 3.7V at a constant current of 0.33C, then charged at a constant voltage of 3.7V until the current drops to 0.05C, and then discharged to 2.5V at a constant current of 0.33C to obtain an initial discharge capacity of D1; after the battery is stored in a constant temperature environment at 25°C for 60 days, the above test steps are repeated to obtain a discharge capacity of D2. The capacity retention rate of the battery after storage for 60 days = D2/D1×100%. The test procedures for the comparative examples and other examples were the same as above.

### III. Analysis on test results of each example and comparative example

Batteries of the examples and comparative examples were each prepared according to the above method, and measured for various performance parameters. The results are shown in Table 1 and Table 2 below.

**Table 1**

| No. | Composite separator | | | | | | | |
|---|---|---|---|---|---|---|---|---|
| | polymer coating | | | | | | Separator substrate | Sodium ion conductivity /(mS/cm) |
| | Polymer | Surfactant additive | Mass content of surfactant additive | Thickness of coating (nm) | Reinforcing component | Mass content of reinforcing component | | |
| Example 1 | CMC | / | / | 200 | / | / | PE | 0.53 |
| Example 2 | CMC | bis(sodium sulfopropyl)disulfide | 0.50% | 200 | / | / | PE | 0.53 |
| Example 3 | CMC | bis(sodium sulfopropyl)disulfide | 0.50% | 15 | / | / | PE | 0.56 |
| Example 4 | CMC | bis(sodium sulfopropyl)disulfide | 0.50% | 50 | / | / | PE | 0.55 |
| Example 5 | CMC | bis(sodium sulfopropyl)disulfide | 0.50% | 1000 | / | / | PE | 0.37 |
| Example 6 | CMC | bis(sodium sulfopropyl)disulfide | 0.50% | 1500 | / | / | PE | 0.31 |
| Example 7 | CMC | bis(sodium sulfopropyl)disulfide | 0.50% | 2000 | / | / | PE | 0.18 |
| Example 8 | CMC | bis(sodium sulfopropyl)disulfide | 0.50% | 10 | / | / | PE | 0.56 |
| Example 9 | CMC | bis(sodium sulfopropyl)disulfide | 0.05% | 200 | / | / | PE | 0.53 |
| Example 10 | CMC | bis(sodium sulfopropyl)disulfide | 0.20% | 200 | / | / | PE | 0.53 |
| Example 11 | CMC | bis(sodium sulfopropyl)disulfide | 1.00% | 200 | / | / | PE | 0.54 |
| Example 12 | CMC | bis(sodium sulfopropyl)disulfide | 3.00% | 200 | / | / | PE | 0.51 |
| Example 13 | CMC | bis(sodium sulfopropyl)disulfide | 5.00% | 200 | / | / | PE | 0.52 |
| Example 14 | PAANa | bis(sodium sulfopropyl)disulfide | 0.50% | 200 | / | / | PE | 0.51 |
| Example 15 | sodium alginate | bis(sodium sulfopropyl)disulfide | 0.50% | 200 | / | / | PE | 0.52 |
| Example 16 | Na-type perfluorosulfo nic acid resin | bis(sodium sulfopropyl)disulfide | 0.50% | 200 | / | / | PE | 0.57 |
| Example 17 | CMC | sodium dodecyl sulfate | 0.50% | 200 | / | / | PE | 0.52 |
| Example 18 | CMC | polyethylene glycol | 0.50% | 200 | / | / | PE | 0.49 |
| Example 19 | CMC | bis(sodium sulfopropyl)disulfide | 0.50% | 200 | / | / | spandex fiber | 0.46 |
| Example 20 | CMC | bis(sodium sulfopropyl)disulfide | 0.50% | 200 | SBR | 10.00% | PE | 0.47 |
| Example 21 | CMC | bis(sodium sulfopropyl)disulfide | 0.50% | 200 | PVDF | 10.00% | PE | 0.44 |
| Example 22 | CMC | bis(sodium sulfopropyl)disulfide | 0.50% | 200 | / | / | PE | 0.53 |
| Example 23 | CMC | bis(sodium sulfopropyl)disulfide | 0.50% | 200 | / | / | PE | 0.53 |
| Example 24 | CMC | bis(sodium sulfopropyl)disulfide | 0.50% | 200 | / | / | PE | 0.53 |
| Example 25 | CMC | bis(sodium sulfopropyl)disulfide | 0.50% | 200 | / | / | PE | 0.53 |
| Example 26 | CMC | bis(sodium sulfopropyl)disulfide | 0.50% | 200 | / | / | PE | 0.53 |
| Comparative Example 1 | / | / | / | / | / | / | PE | 0.59 |
| Comparative Example 2 | / | / | / | / | / | / | PE | 0.59 |
| Comparative Example 3 | PVDF | / | / | 200 | / | / | PE | 0.11 |
| Comparative Example 4 | PVDF | / | / | 200 | / | / | PE | 0.11 |

**Table 2**

| No. | Electrolyte solution | Negative electrode plate | Battery | |
|---|---|---|---|---|
| | Solvent | Is there a primer layer on the negative electrode current collector? | Capacity retention rate after 100 cycles/% | Storage performance/% |
| Example 1 | ethylene glycol dimethyl ether | No | 80.5 | 82.6 |
| Example 2 | ethylene glycol dimethyl ether | No | 93.7 | 95.4 |
| Example 3 | ethylene glycol dimethyl ether | No | 88.8 | 90.5 |
| Example 4 | ethylene glycol dimethyl ether | No | 91.2 | 93 |
| Example 5 | ethylene glycol dimethyl ether | No | 89.4 | 91.1 |
| Example 6 | ethylene glycol dimethyl ether | No | 87.3 | 90.3 |
| Example 7 | ethylene glycol dimethyl ether | No | 73.4 | 79.6 |
| Example 8 | ethylene glycol dimethyl ether | No | 82.2 | 84.4 |
| Example 9 | ethylene glycol dimethyl ether | No | 83.6 | 84.9 |
| Example 10 | ethylene glycol dimethyl ether | No | 90.8 | 91.8 |
| Example 11 | ethylene glycol dimethyl ether | No | 90.3 | 91.6 |
| Example 12 | ethylene glycol dimethyl ether | No | 84.4 | 84.4 |
| Example 13 | ethylene glycol dimethyl ether | No | 74.3 | 74.1 |
| Example 14 | ethylene glycol dimethyl ether | No | 91.7 | 90.5 |
| Example 15 | ethylene glycol dimethyl ether | No | 92.6 | 92.9 |
| Example 16 | ethylene glycol dimethyl ether | No | 90.4 | 92.7 |
| Example 17 | ethylene glycol dimethyl ether | No | 92.4 | 93.5 |
| Example 18 | ethylene glycol dimethyl ether | No | 93.1 | 95.2 |
| Example 19 | ethylene glycol dimethyl ether | No | 89.5 | 88.5 |
| Example 20 | ethylene glycol dimethyl ether | No | 96.3 | 98.7 |
| Example 21 | ethylene glycol dimethyl ether | No | 95.9 | 98.4 |
| Example 22 | ethylene glycol dimethyl ether | No | 93.1 | 95.4 |
| Example 23 | tetrahydrofuran | No | 88.2 | 86.5 |
| Example 24 | dimethyl carbonate | No | 70.1 | 67.3 |
| Example 25 | ethylene glycol dimethyl ether | single-walled carbon nanotube primer layer | 97.6 | 97.8 |
| Example 26 | ethylene glycol dimethyl ether | Graphene primer layer | 97.1 | 96.5 |
| Comparative Example 1 | ethylene glycol dimethyl ether | No | 64.0 | 58.6 |
| Comparative Example 2 | dimethyl carbonate | No | 21.1 | 40.3 |
| Comparative Example 3 | dimethyl carbonate | No | 33.7 | 48.9 |
| Comparative Example 4 | ethylene glycol dimethyl ether | No | 46.6 | 52.8 |

According to the above results, the composite separators in Examples 1-26 include a separator substrate and a polymer coating located on one side of the separator substrate, and the ion conductivity of the composite separator is 0.1 mS/cm to 6 mS/cm. From the comparison between Examples 1 to 23 and Comparative Examples 1 and 4, as well as between Example 24 and Comparative Examples 2 to 3, it can be seen that providing a polymer coating on one side of the separator substrate and controlling the ion conductivity of the composite separator to be 0.3 mS/cm to 1 mS/cm is beneficial to improving the capacity retention rate and storage performance of the battery after 100 cycles, thereby broadening the application of the battery.

From the comparison between Examples 1 to 23 and Comparative Examples 1 and 4, it can be seen that the polymer coating includes a polymer containing a -COONa group or a -SOONa group, which is beneficial to improving the capacity retention rate and storage performance of the battery after 100 cycles. From the comparison between Examples 2 and 15 and Comparative Examples 14 and 16, it can be seen that compared with the polymer coating containing a polymer having a - SOONa group, the polymer coating containing a -COONa group is beneficial to further improving the capacity retention rate and storage performance of the battery after 100 cycles.

From the comparison between Examples 1 to 23 and Comparative Examples 1 and 4, it can be seen that the polymer in the polymer coating including sodium carboxymethyl cellulose, sodium polyacrylate, sodium alginate or Na-type perfluorosulfonic acid resin is beneficial to improving the capacity retention rate and storage performance of the battery after 100 cycles.

From the comparison between Examples 2 to 6 and Examples 7 to 8, it can be seen that controlling the thickness of the polymer coating to be 15 nm to 1500 nm is beneficial to further improving the capacity retention rate and storage performance of the battery after 100 cycles. From the comparison between Examples 2 and 4-5 and Examples 3 and 6, it can be seen that controlling the thickness of the polymer coating to be 50 nm to 1000 nm is beneficial to further significantly improving the capacity retention rate and storage performance of the battery after 100 cycles.

From the comparison between Examples 9 to 13, 17 to 18 and Comparative Example 1, it can be seen that the polymer coating also includes a surfactant additive, and the surfactant additive includes sodium dodecyl sulfate, bis(sodium sulfopropyl)disulfide or polyethylene glycol, which is beneficial to improving the capacity retention rate and storage performance of the battery after 100 cycles.

From the comparison between Examples 2 and 9-13 and Comparative Example 1, it can be seen that controllingthe mass content of the surfactant additive to be 0.05%-5% is beneficial toimproving the capacity retention rate and storage performance of the battery after 100 cycles. From the comparison between Examples 2 and 10-12 and Examples 9 and 13, it can be seen that controllingthe mass content of the surfactant additive to be 0.2%-3% is beneficial tofurther improving the capacity retention rate and storage performance of the battery after 100 cycles.

From the comparison between Examples 20-21 and Example 2, it can be seen that the polymer coating also includes a reinforcing component, and the reinforcing component includes polyvinylidene fluoride or styrene-butadiene copolymer, which is beneficial to further improving the capacity retention rate and storage performance of the battery after 100 cycles.

From the comparison between Examples 2 and 22-23 and Example 24, it can be seen that compared with the solvent in the electrolyte solution being selected from dimethyl carbonate, the solvent in the electrolyte solution being selected from ethylene glycol dimethyl ether, ethylene glycol diethyl ether or tetrahydrofuran is more beneficial to improving the capacity retention rate and storage performance of the battery after 100 cycles. From the comparison between Examples 2 and 22 and Example 23, it can be seen that compared with the solvent in the electrolyte solution being selected from tetrahydrofuran, the solvent in the electrolyte solution being selected from ethylene glycol dimethyl ether or ethylene glycol diethyl ether is more beneficial to further improving the capacity retention rate and storage performance of the battery after 100 cycles.

From the comparison between Examples 25-26 and Example 2, it can be seen that providing a single-walled carbon nanotube primer layer or a graphene primer layer on the negative electrode current collector is beneficial to improving the capacity retention rate and storage performance of the battery after 100 cycles.

It should be noted that the present application is not limited to the above embodiments. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A composite separator, wherein the composite separator comprises a separator substrate and a polymer coating located on one side of the separator substrate, and the sodium ion conductivity of the composite separator is 0.3 mS/cm to 1 mS/cm.

2. The composite separator according to claim 1, wherein the polymer coating comprises at least one of polymers containing sodium carboxylate groups and/or sodium sulfonate groups, and the polymer can conduct metallic sodium ions.

3. The composite separator according to claim 1 or 2, wherein the polymer comprises one or more of sodium carboxymethyl cellulose, sodium polyacrylate, sodium alginate, Na-type perfluorosulfonic acid resin, sodium polymethacrylate and sodium polystyrene sulfonate, and optionally comprises one or more of sodium carboxymethyl cellulose and sodium alginate.

4. The composite separator according to any one of claims 1 to 3, wherein the thickness of the polymer coating is 15 nm to 1500 nm, optionally 50 nm to 1000 nm.

5. The composite separator according to any one of claims 1 to 4, wherein the polymer coating further comprises a surfactant additive, wherein the surfactant additive comprises one or more of sodium dodecyl sulfate, bis(sodium sulfopropyl)disulfide and polyethylene glycol, and optionally comprises bis(sodium sulfopropyl)disulfide.

6. The composite separator according to claim 5, wherein the mass content of the surfactant additive is 0.05% to 5%, optionally 0.2% to 3%, based on the total mass of the polymer coating.

7. The composite separator according to any one of claims 1 to 6, wherein the polymer coating further comprises a reinforcing component, and the reinforcing component comprises one or more of polyvinylidene fluoride, styrene-butadiene copolymer, polyimide, polyacrylonitrile, polyacrylamide, polymethyl methacrylate, nitrile butadiene rubber and polyurethane, optionally comprises styrene-butadiene copolymer.

8. The composite separator according to claim 7, wherein the mass content of the reinforcing component is 0.01% to 50%, optionally 0.05% to 10%, based on the total mass of the polymer coating.

9. The composite separator according to any one of claims 1 to 8, wherein the separator substrate comprises one or more of polyethylene, polypropylene, polyester, cellulose, polyimide, polyamide, spandex fiber and aramid fiber, and optionally comprises polyethylene.

10. A sodium secondary battery, comprising a negative electrode plate, an electrolyte solution, and the composite separator according to any one of claims 1 to 9, wherein the polymer coating of the composite separator is located on the side of the negative electrode plate.

11. The sodium secondary battery according to claim 10, wherein the secondary battery is a negative-electrode-free sodium secondary battery.

12. The sodium secondary battery according to claim 10 or 11, wherein the electrolyte solution comprises an ether solvent, and the ether solvent comprises one or more of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether and crown ether, optionally comprises one or more of ethylene glycol dimethyl ether, ethylene glycol diethyl ether, diethylene glycol dimethyl ether, and tetraethylene glycol dimethyl ether.

13. The sodium secondary battery according to any one of claims 10 to 12, wherein the negative electrode plate comprises a negative electrode current collector and a primer layer disposed on at least one surface of the negative electrode current collector, and the primer layer comprises one or more of carbon nanotubes, graphite, graphene, silver-carbon composite nanoparticles, and tin-carbon composite nanoparticles.

14. The sodium secondary battery according to claim 13, wherein the surface density of the primer layer is 0.5 g/m² to 35 g/m².

15. The sodium secondary battery according to claim 13 or 14, wherein the thickness of the primer layer is 0.2 µm to 50 µm.

16. An electrical apparatus, comprising the sodium secondary battery according to any one of claims 10 to 15.
